# FASCICULE DE BREVET EUROPEEN

(11) **EP 3 749 840 B1**
(45) Date de publication et mention de la délivrance du brevet: **02.03.2022**
(21) Numéro de dépôt: 19717545.8
(22) Date de dépôt: 19.03.2019
(51) Int. Cl.: F01D 25/16, F01D 25/18, B22F 3/105, B22F 5/00

(54) **SUPPORT DE PALIER POUR MOTEUR D'AÉRONEF FABRIQUE PAR FABRICATION ADDITIVE**
MITTELS GENERATIVER FERTIGUNG HERGESTELLTE LAGERHALTERUNG FÜR EINEN FLUGZEUGMOTOR
BEARING SUPPORT FOR AN AIRCRAFT ENGINE MANUFACTURED BY ADDITIVE MANUFACTURING

(30) Priorité: 23.03.2018 FR 1852560
(43) Date de publication de la demande: 16.12.2020
(73) Titulaire: SAFRAN AIRCRAFT ENGINES, 75015 Paris (FR)
(72) Inventeur: OVAERE, Nicolas, 77550 MOISSY-CRAMAYEL (FR); BUNEL, Jacques, Marcel, Arthur, 77550 MOISSY-CRAMAYEL (FR); GRICOURT, Thomas, 77550 MOISSY-CRAMAYEL (FR); SOMAZZI, Paul, André, 77550 MOISSY-CRAMAYEL (FR); ZAMBELLI, Sylvain, 77550 MOISSY-CRAMAYEL (FR)
(74) Mandataire: Brevalex
(86) Numéro de dépôt international: PCT/FR2019/050613
(87) Numéro de publication internationale: WO 2019/180365

(56) Documents cités:
- DE-A1-102015 010 388
- FR-A1- 3 025 491
- FR-A1- 3 046 556
- US-A1- 2013 227 930

## Description

### DOMAINE TECHNIQUE

La présente invention concerne la formation d'un support de palier de moteur d'aéronef par fabrication additive.

### CONTEXTE GENERAL DE L'INVENTION

Un turboréacteur à double flux comporte une manche d'entrée recevant l'air en amont qui est aspiré par un compresseur basse pression, avant d'être divisé en un flux primaire central et un flux secondaire entourant le flux primaire. Après avoir passé le compresseur basse pression, le flux secondaire est propulsé vers l'aval pour générer une poussée en étant soufflé autour du flux primaire, l'amont et l'aval étant définis par rapport au sens d'écoulement de fluide dans le turboréacteur.

Après avoir passé le compresseur basse pression, le flux primaire traverse un compresseur haute pression avant d'atteindre une chambre de combustion. Ce flux primaire est ensuite détendu dans une turbine haute pression liée en rotation avec le compresseur haute pression, puis dans une turbine basse pression liée en rotation au compresseur basse pression, avant d'être expulsé vers l'aval.

Dans le cas d'un turboréacteur double corps, le compresseur haute pression et la turbine haute pression font partie d'un corps haute pression qui entoure un tourillon basse pression en tournant à une vitesse différente de celui-ci, ce tourillon basse pression portant le compresseur basse pression et la turbine basse pression.

Le tourillon basse pression et le corps haute pression sont portés en amont et en aval par des paliers logés dans des enceintes les isolant du reste du moteur. Chaque palier est lubrifié par de l'huile circulant dans l'enceinte qui l'entoure, et qui est délimitée par des éléments fixes et par l'élément rotatif qui la traverse. Un tel palier est porté par un support tout en étant entouré par l'enceinte. Un tel support de palier est connu du document US2013/227930 A1.

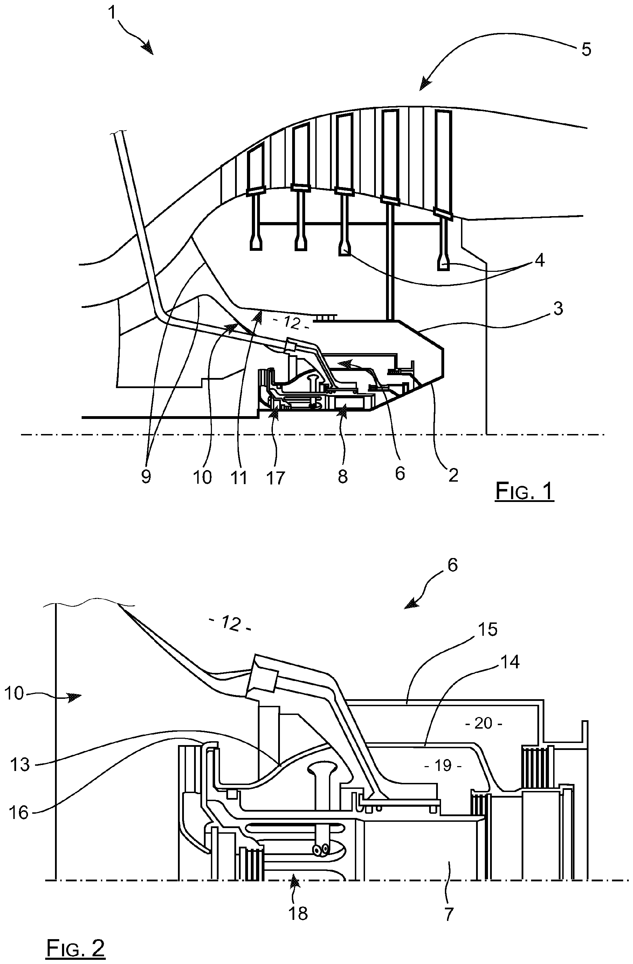

La figure 1, d'une section d'une partie aval d'un turboréacteur 1 selon une possibilité de conception que l'invention se propose d'améliorer, fait apparaître un tourillon basse pression 2, à l'extrémité aval duquel est solidarisée une virole 3 qui s'étend radialement pour être solidarisée à des disques 4 d'une turbine basse pression 5 s'étendant autour d'une portion aval du tourillon 2.

Le tourillon 2 est entouré dans sa région aval par un support de palier 6 qui porte un manchon 7 destiné à recevoir un roulement à rouleaux 8 pour supporter la partie aval du tourillon 2, et qui est solidarisé à un élément fixe 9 du moteur situé à son amont, par l'intermédiaire d'un cône 10. Ce cône 10 s'évase depuis sa portion aval où il est solidarisé au support 6, vers sa portion amont où il est solidarisé à l'élément fixe 9.

Le cône 10 est entouré par un élément cylindrique 11 solidarisé à sa portion amont qu'il prolonge vers l'aval, pour délimiter avec ce cône 10 et avec la virole 3 une portion d'une enceinte 12 renfermant le palier.

Comme visible sur la figure 2 d'une possibilité de conception que l'invention se propose d'améliorer, une jupe 13 et deux organes de révolution 14 et 15 prolongent la région centrale du cône 10 respectivement vers l'amont et vers l'aval, cette jupe et ces organes ayant des diamètres externes de l'ordre du diamètre interne du cône 10. Un support amont 16 comportant une couronne par laquelle il est fixé à l'amont de la jupe 13 porte un joint radial segmenté 17 qui délimite une enceinte 18 en amont du roulement 8. L'élément de révolution 14 délimite conjointement avec le tourillon 2 deux enceintes concentriques 19 et 20 situées en aval du roulement 8.

Compte tenu des contraintes de fabrication et de montage avec des techniques conventionnelles, ces composants, à savoir le support 6, le cône 10, l'élément cylindrique 11 la jupe 13, l'élément 14 et le support amont 16 sont fixés les uns aux autres selon différents procédés incluant notamment le soudage TIG.

D'une manière générale, la conception et la fabrication d'un support de palier sont des opérations complexes et coûteuses impliquant une multiplicité de processus.

Le but de l'invention est d'apporter une solution pour remédier à cet inconvénient.

### EXPOSÉ DE L'INVENTION

A cet effet, l'invention a pour objet un support de palier pour moteur d'aéronef, fabriqué d'un seul tenant par fabrication additive sur lit de poudre à partir d'un plateau de fabrication, comprenant un élément cylindrique incluant un raidisseur annulaire à section évolutive le long de sa circonférence, ce raidisseur étant formé d'une alternance de portions ayant une section, en coupe radiale de l'élément cylindrique, de forme correspondant à celle de la lettre Γ devant être supportées durant la fabrication additive, et de portions ayant une section, en coupe radiale de l'élément cylindrique, de forme correspondant à celle de la lettre γ non supportées durant la fabrication additive.

Avec cette solution, le raidisseur est adapté à la fabrication additive en garantissant à la fois une quantité minimale de supportage alvéolaire et une opération de retouche post-fabrication additive satisfaisante.

L'invention concerne également un support de palier ainsi défini, dans lequel chaque portion à section en γ comporte une première rampe qui dépasse de l'élément cylindrique et une seconde rampe qui dépasse de la première rampe pour rejoindre l'élément cylindrique.

L'invention concerne également un support de palier ainsi défini, dans lequel l'élément cylindrique comporte un renfoncement au niveau de chaque portion à section en γ.

L'invention concerne également un support de palier ainsi défini, dans lequel au moins une portion à section en Γ forme une partie d'attache issue d'un usinage d'une surépaisseur formée par fabrication additive.

L'invention concerne également un moteur d'aéronef comprenant un support de palier ainsi défini.

L'invention concerne également un procédé d'obtention par fabrication additive d'un support de palier ainsi défini, incluant une étape de formation par fabrication additive d'un seul tenant d'une pièce brute sur le plateau de fabrication, et dont la fabrication du raidisseur implique la formation de supportages soutenant uniquement les portions à section en Γ.

### BRÈVE DESCRIPTION DES DESSINS

- La figure 1 déjà décrite est une vue schématique en coupe d'une section d'une partie aval d'un turboréacteur ;
- La figure 2 déjà décrite est une vue en coupe d'une portion de section de partie aval d'un turboréacteur;
- La figure 3 est une vue en perspective d'un support de palier fabriqué conformément à l'invention ;
- La figure 4 est une vue en coupe d'une partie de moteur d'aéronef équipée d'un support de palier fabriqué conformément à l'invention ;
- La figure 5 est un une représentation schématique illustrant une problématique d'effondrement lors de la fabrication additive d'une pièce ;
- La figure 6 est une vue en coupe transversale d'un support de palier avec des supportages formés selon l'Etat de la technique.
- La figure 7 est une vue en coupe transversale et en perspective d'un support de palier selon l'invention ;
- La figure 8 est une vue schématique d'une partie d'un brut de support de palier selon l'invention ;
- La figure 9 est une vue de côté du support de palier selon l'invention ;
- La figure 10 est une comparaison schématique d'un raidisseur de l'état de la technique avec un raidisseur selon l'invention ;
- La figure 11 est une vue de détail d'une portion de raidisseur formant partie d'attache selon l'invention.

### EXPOSÉ DÉTAILLÉ DE MODES DE RÉALISATION PARTICULIERS

### Support de palier

Selon l'invention, le support de palier est une pièce métallique formée d'un seul tenant par fabrication additive, incluant en particulier un cône de fixation et un élément cylindrique entourant ce cône, au lieu de les fabriquer séparément pour les assembler ensuite.

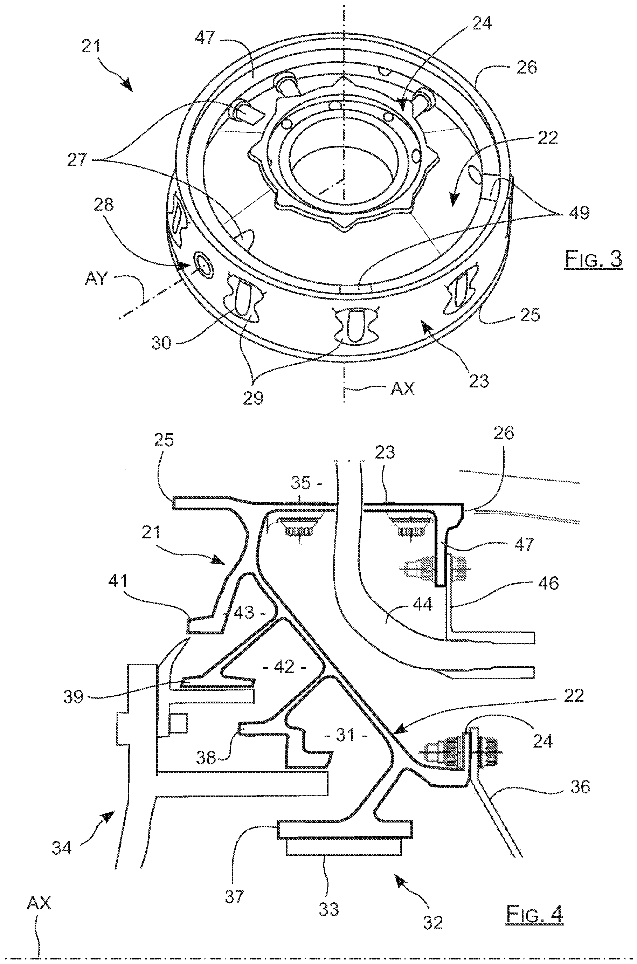

Ce support de palier qui apparaît sur la figure 3 où il est repéré par 21 comporte un tronc de cône ou cône 22, ayant son pourtour de grand diamètre prolongé par un élément généralement cylindrique 23, et ayant son pourtour de petit diamètre prolongé par une couronne 24. Le support de palier 21 a une forme générale de révolution autour d'un axe AX coïncidant avec l'axe longitudinal du moteur dans lequel il est destiné à être monté, le cône 22 et l'élément cylindrique 23 ayant cet axe AX comme axe de révolution.

L'élément cylindrique 23 s'étend depuis un premier bord 25 jusqu'à un second bord 26 circulaires ayant sensiblement les mêmes diamètres tout en étant espacés l'un de l'autre le long de l'axe AX. Le premier bord 25 est le plus proche du pourtour de grand diamètre du cône 22, ce cône présentant un diamètre qui rétrécit en se rapprochant du second bord 26.

Le support de palier 21 comporte en outre quatre conduits 27, dans lesquels circule de l'huile et/ou de l'air, qui traversent le cône 22 radialement par rapport à l'axe AX en s'étendant jusqu'au voisinage de l'élément cylindrique 23. Un orifice 28 est formé dans l'élément cylindrique en vis-à-vis de chaque conduit 27.

Ce support palier inclut également bossages 29 qui dépassent radialement de l'élément cylindrique 23 vers l'extérieur en étant régulièrement espacés le long de sa circonférence. Chaque bossage 29 comporte une fenêtre centrale 30 c'est-à-dire une ouverture mettant en communication l'intérieur et l'extérieur de l'élément cylindrique 23.

La figure 4 montre une partie de moteur d'aéronef équipée d'un support de palier du type du support 21 délimitant une enceinte principale 31 qui entoure un palier 32 enserrant une bague extérieure de roulement 33. Cette enceinte principale 31 est délimitée par une portion de tourillon 34 d'axe AX, par le support de palier 21 dont l'élément cylindrique 23 est fixé à un élément fixe 35 du moteur, et par une virole 36, fixée à la couronne 24 qui prolonge le support de palier 21 vers l'axe AX.

Une série d'anneaux 37, 38, 39, 41 dépassent du cône 22 vers l'axe AX. Le premier anneau 37 dépasse dans l'enceinte principale 31 pour porter la bague 33. Chaque autre anneau 38, 39 et 41 est jointif avec une portion correspondante du tourillon 34, pour délimiter avec lui deux enceintes annulaires annexes 42 et 43.

Lorsque le support de palier 21 est intégré dans le moteur, il est équipé d'au moins une canalisation 44 qui traverse radialement une fenêtre 30, et se rabat parallèlement à l'axe AX. Cette canalisation 44 est portée par un organe de maintien 46 fixé à un raidisseur 47. Ce raidisseur 47 a une forme de couronne interne, c'est-à-dire dépassant radialement vers l'axe AX sur tout le pourtour de l'élément cylindrique, en étant situé au voisinage du second bord 26. Un tel support de palier comporte typiquement deux canalisation du type de la canalisation 44, espacées l'une de l'autre d'un angle de trente degrés autour de l'axe AX.

On distingue des portions de raidisseur repérées par 48 qui sont situées dans le prolongement des fenêtres 30, et présentent une section en Γ, autrement dit présentant une forme correspondant à celle de la lettre Γ en coupe radiale de l'élément cylindrique, en s'étendant perpendiculairement à l'axe AX. Deux de ces portions à section en Γ 48 forment des parties d'attache repérés par 49 sur la figure 3, au niveau desquels les organes de maintien 46 sont fixés à ce raidisseur 47.

Ces parties d'attache 49 subissent post-fabrication additive une retouche consistant à les aplanir par usinage surfacique pour les débarrasser des grains de poudre partiellement fusionnés/frittés qui dépassent et altèrent la montabilité des organes de maintien 46. A cet effet, les parties d'attache 49 de la pièce brute, autrement dit du support de palier 21 en sortie de machine de fusion/frittage laser, comporte une surépaisseur destinée à être usinée.

### Fabrication additive

La fabrication additive sur lit de poudre désigne l'ajout de matière couche par couche, sur un plateau de fabrication d'une machine dédiée, pour former un objet physique à partir d'un modèle numérique. Dans le cas d'une pièce métallique, on recourt au procédé de fusion/frittage laser qui consiste à faire fondre totalement ou partiellement une fine couche de poudre de matière à l'aide d'un laser à chaque passe.

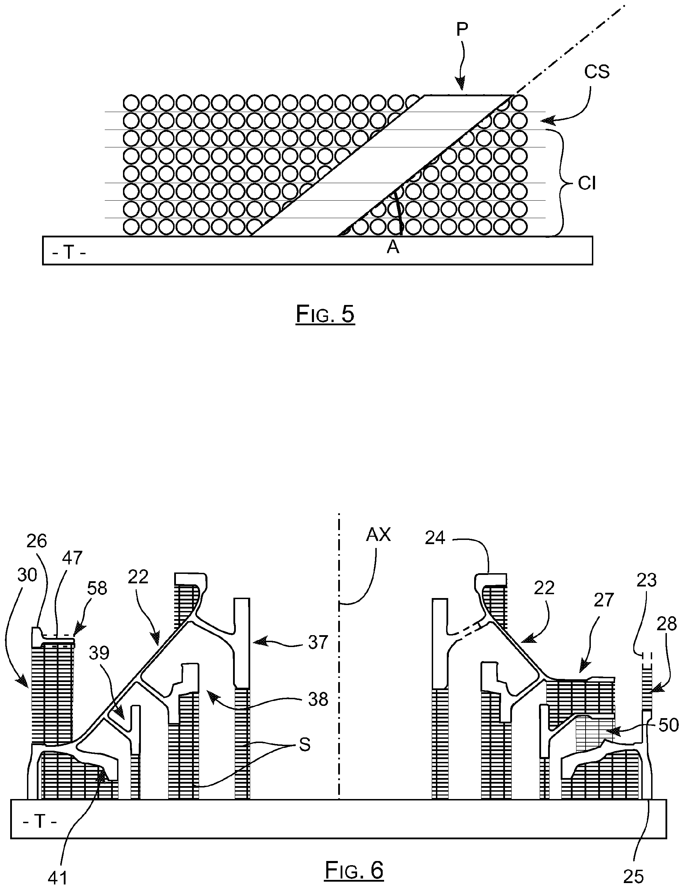

La poudre utilisée en fusion/frittage laser n'est pas autoportante. Comme visible sur la figure 5, lors de la fabrication d'une pièce P, la poudre non fusionnée/frittée de couches inférieures repérées par CI, c'est-à-dire qui n'est pas balayée par le laser, n'est pas capable de soutenir la poudre fusionnée d'une couche supérieure consécutive CS en deçà d'un angle de dépouille minimum A entre la pièce P et le plateau de fabrication T.

Pour résoudre cette question, on forme tout en fabriquant la pièce, des supportages qui soutiennent chaque région ayant un angle de dépouille inférieur à l'angle minimum A, pour éviter un effondrement local. La pièce et les supportages sont solidaires, fabriqués en même temps et faits du même matériau.

Une fois la fabrication additive achevée, les supportages constituent de la matière non fonctionnelle et ainsi doivent être retirés, par exemple par usinage. A cet effet, ces supportages sont des éléments entièrement alvéolaires, généralement sous la forme de treillis ou issus de l'empilement ordonné de structure dite lattices, consommant moins de poudre tout en étant plus aisément retirable qu'un bloc de matière uniforme.

Durant sa fabrication, le support de palier 21 est orienté de sorte que son axe de révolution AX est normal au plateau T, en débutant par la formation du premier bord 25 de l'élément cylindrique 23. Dans l'exemple des figures, l'angle de dépouille minimum A est défini à 40° par rapport au plateau T, et certaines régions du support de palier 21 présentent un angle de dépouille inférieur à cet angle minimum A, et nécessitent d'être soutenues.

Dans la suite de la description qui va suivre, les termes « inférieur » et « supérieur » sont à considérer par rapport au sens de fabrication du support de palier à partir du plateau de fabrication T. Un élément est dit supérieur par rapport à un autre s'il est plus éloigné du plateau T disque que l'autre, et un élément est dit inférieur par rapport à un autre s'il est moins éloigné du plateau T que l'autre.

### Fabrication du support de palier avec des supportages selon l'Etat de la technique

L'exemple de la figure 6 montre des supportages S pour la fabrication du support de palier 21 qui sont entièrement alvéolaires et agencés selon l'Etat de la technique, et dans lequel chaque anneau 37, 38, 39 et 41 nécessite un supportage érigé depuis le plateau T, puisque les faces à partir desquelles débute leur fabrication sont à distance du plateau T et parallèles à celui-ci, ayant de fait un angle de dépouille de 0°.

Des supportages S sont aussi nécessaires à la formation des conduits 27, des orifices 28 et des fenêtres 30. Par ailleurs, le cône 22 comprend un trou traversant 50 formé sous des conduits 27, ce qui nécessite de soutenir localement l'anneau 39 avec un supportage érigé à partir de l'anneau 41 situé en dessous.

En ce qui concerne la couronne 24 et les portions à section en Γ 48 situées au niveau des fenêtres 30, elles s'étendent normalement à l'axe AX. Cette couronne 24 et ces portions à section en Γ 48 sont ainsi parallèles au plateau T, et nécessitent de fait d'être soutenues par des supportages érigés à partir du support de palier 21, notamment au niveau du cône 22.

La surépaisseur des parties d'attache 49 est repérée ici en pointillés par 58, attendu que les portions à section en Γ 48 ne présentent pas toutes une telle partie d'attache 49.

### Raidisseur selon l'invention

Compte tenu de la quantité de supportages alvéolaires d'ores et déjà nécessaire à la fabrication des portions à section en Γ 48, situées dans le prolongement radial des fenêtres 30, l'idée à la base de l'invention est de prévoir un raidisseur 47 annulaire à section évolutive pour éviter la formation de supportage additionnel.

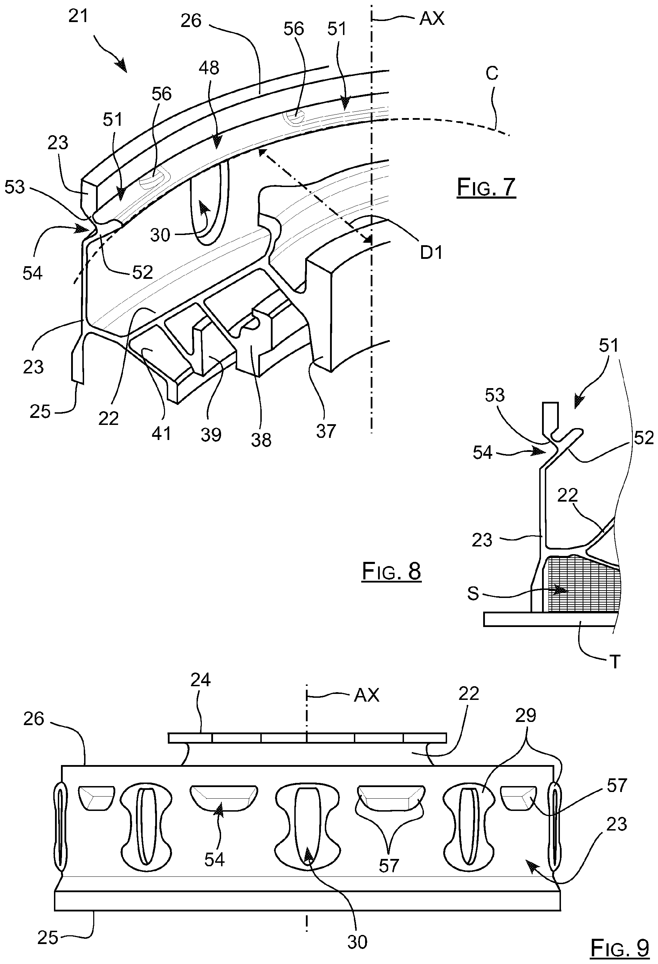

A cet effet, les portions à section Γ 48 sont reliées entre elles par des portions intermédiaires 51 présentant une section ayant une forme correspondant à la lettre Y selon un plan de coupe radial de l'élément cylindrique qui traverse le support de palier entre deux fenêtres 30, comme montré à la figure 7. Autrement dit, le raidisseur 47 est formé d'une alternance entre portions à section en Γ 48 et portions à section en γ 51, le long de sa circonférence.

Chaque portion à section en γ 51 comprend une première rampe 52 qui prolonge l'élément cylindrique 23 en se rabattant vers l'axe AX en formant avec le plateau T un angle de 40°. Cette première rampe 52 se ramifie en région centrale pour former une seconde rampe 53 qui forme un angle de 40° avec le plateau T, en s'étendant perpendiculairement à la première rampe pour rejoindre l'élément cylindrique 23 s'étendant jusqu'au second bord 26 circulaire.

En outre, l'élément cylindrique 23 comporte des renfoncements repérés par 54, qui suivent le contour des portions de raidisseur à section en γ 51 pour alléger la masse globale du support de palier 21, en respectant une valeur d'angle de dépouille supérieure à 40°. Avec cet agencement, la fabrication des portions à section en γ 51 et des renfoncements 54 ne requiert pas de supportage alvéolaire S comme montré à la figure 8.

Au niveau des jonctions entre les portions de raidisseur à section en γ 51 et celles à section en Γ 48, les arêtes vives sont adoucies par un congé intérieur repéré par 56 sur la figure 7 et, de la même manière, les arêtes vives au niveau de la jonction entre les renfoncements 54 et le reste de la structure de l'élément cylindrique 23 sont adoucies par un congé extérieur repéré par 57 sur la figure 9.

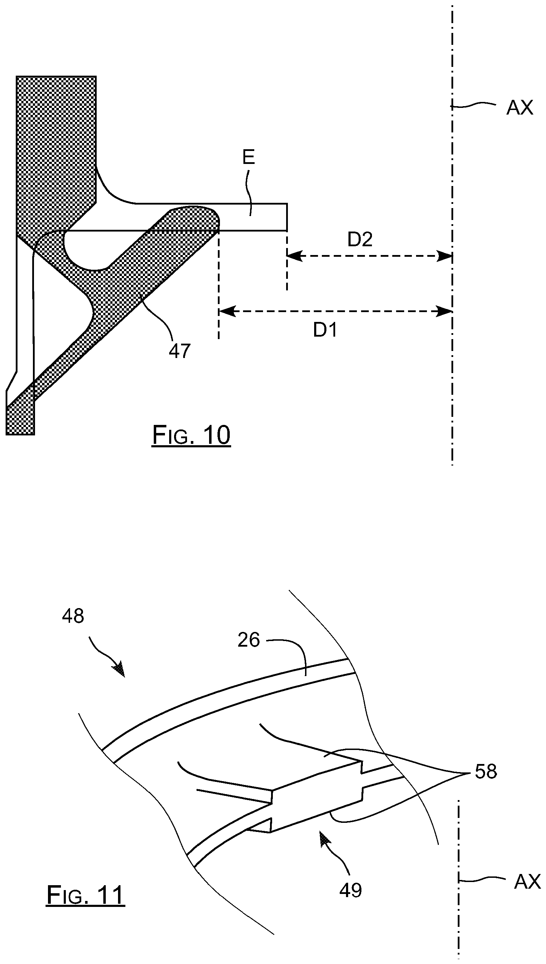

Le raidisseur 47, issu de l'association des portions à section en Γ et à section en γ, délimite un cercle intérieur continu C de diamètre D1, qui correspond à son état le plus avancé vers l'axe AX. Au-delà de la limitation des supportages nécessaires à sa fabrication et des coûts de retrait induits, la forme évolutive du raidisseur 47 constitue également un gain en simplicité d'usinage des parties d'attache 49, en comparaison avec un raidisseur continu de l'état de la technique avec une section en Γ sur 360° autour de l'axe AX. En effet, comme montré sur la figure 10 qui superpose le contour du raidisseur évolutif 47 selon l'invention, au niveau d'une portion à section en γ, avec celui d'un raidisseur de l'état de la technique repéré par E, c'est-à-dire continu avec une section en Γ sur toute sa circonférence, il s'agirait que le raidisseur E ait un diamètre intérieur D2 inférieur à D1 pour conserver les même propriétés mécaniques que ce dernier, telles que la masse et la souplesse.

L'invention permet d'augmenter le diamètre intérieur du raidisseur 47, laissant un plus grand espace pour l'accès d'un outil standard lors de l'usinage de la surépaisseur 58 des parties d'attache 49 formées au niveau de portions à section en Γ 48, comme illustrée plus en détail sur la figure 11 une fois les supportages S retirés. Dans le cas contraire, c'est-à-dire dans le cas d'un raidisseur E, la complexité du support de palier et l'encombrement induit par le diamètre D2, nécessiterait l'utilisation d'un outillage spécifique dédiée uniquement à l'opération d'usinage des parties d'attache 49.

D'une manière générale, la forme du raidisseur 47 selon l'invention est adaptée à la fabrication additive en garantissant à la fois une quantité minimale de supportage alvéolaire et une usinabilité satisfaisante, autrement dit ne requérant pas d'ouillage spécifique.

Dans notre cas, la valeur de l'angle de dépouille minimum A est définie à 40° par rapport au plateau T. Il est cependant à noter que la valeur de cet angle de dépouille minimum A n'est pas nécessairement égale à 40°, attendu qu'elle dépend de la nature de la poudre utilisée. A cet égard, il est à noter que l'invention pourrait prévoir que les portions de raidisseur à section en γ, en particulier les rampes 52, 53, ainsi que les renfoncements 54, forment des angles avec le plateau T d'une valeur différente pour respecter une nouvelle valeur d'angle A.

## Revendications

1. Support de palier (21) pour moteur d'aéronef, fabriqué d'un seul tenant par fabrication additive sur lit de poudre à partir d'un plateau de fabrication (T), comprenant un élément cylindrique (23) incluant un raidisseur (47) annulaire à section évolutive le long de sa circonférence, ce raidisseur (47) étant formé d'une alternance de portions ayant une section, en coupe radiale de l'élément cylindrique, de forme correspondante à celle de la lettre Γ (48) devant être supportées durant la fabrication additive, et de portions ayant une section, en coupe radiale de l'élément cylindrique, de forme correspondant à celle de la lettre Y (51) non supportées durant la fabrication additive.

2. Support de palier (21) selon la revendication 1, dans lequel chaque portion à section en Y (51) comporte une première rampe (52) qui dépasse de l'élément cylindrique (23) et une seconde rampe (53) qui dépasse de la première rampe (52) pour rejoindre l'élément cylindrique (23).

3. Support de palier (21) selon la revendication 1 ou 2, dans lequel l'élément cylindrique (23) comporte un renfoncement (54) au niveau de chaque portion à section en γ (51).

4. Support de palier (21) selon l'une des revendications 1 à 3, dans lequel au moins une portion à section en Γ (48) forme une partie d'attache (49) issue d'un usinage d'une surépaisseur (58) formée par fabrication additive.

5. Moteur d'aéronef comprenant un support de palier (21) selon l'une des revendications précédentes.

6. Procédé d'obtention par fabrication additive d'un support de palier selon l'une des revendications 1 à 4, incluant une étape de formation par fabrication additive d'un seul tenant d'une pièce brute sur le plateau de fabrication (T), et dont la fabrication du raidisseur (47) implique la formation de supportages (S) soutenant uniquement les portions à section en Γ.

## Patentansprüche

1. Lagerhalterung (21) für einen Flugzeugmotor, welche mittels generativer Fertigung einstückig auf einem Pulverbett auf der Grundlage einer Fertigungsplatte (T) hergestellt ist, mit einem zylinderförmigen Element (23), das eine ringförmige Versteifung (47) mit veränderlichem Querschnitt entlang ihres Umfangs aufweist, wobei die Versteifung (47) abwechselnd aus Abschnitten mit einem Querschnitt, in einem Radialschnitt des zylinderförmigen Elements betrachtet, einer dem Buchstaben Γ (48) entsprechenden Form, die während der generativen Fertigung abgestützt werden müssen, und aus Abschnitten mit einem Querschnitt, in einem Radialschnitt des zylinderförmigen Elements betrachtet, einer dem Buchstaben γ (51) entsprechenden Form besteht, die während der generativen Fertigung nicht abgestützt werden.

2. Lagerhalterung (21) nach Anspruch 1, wobei jeder Abschnitt mit einem γ-förmigen Querschnitt (51) eine erste Schräge (52), die über das zylinderförmige Element (23) hinausgeht, und eine zweite Schräge (53) aufweist, die über die erste Schräge (52) hinausgeht und sich mit dem zylinderförmigen Element (23) verbindet.

3. Lagerhalterung (21) nach Anspruch 1 oder 2, wobei das zylinderförmige Element (23) eine Vertiefung (54) auf Höhe jedes Abschnittes mit γ-förmigem Querschnitt (51) aufweist.

4. Lagerhalterung (21) nach einem der Ansprüche 1 bis 3, wobei mindestens ein Abschnitt mit Γ-förmigem Querschnitt (48) ein Befestigungsteil (49) bildet, das aus einer Bearbeitung einer mittels generativer Fertigung ausgebildeten Verdickung (58) entstanden ist.

5. Flugzeugmotor mit einer Lagerhalterung (21) nach einem der vorhergehenden Ansprüche.

6. Verfahren zur Herstellung mittels generativer Fertigung einer Lagerhalterung nach einem der Ansprüche 1 bis 4, mit einem Schritt zur Ausbildung mittels generativer Fertigung eines Rohlings in einem Stück auf der Fertigungsplatte (T), und bei dem die Herstellung der Versteifung (47) die Ausbildung von Abstützungen (S) beinhaltet, welche lediglich die Abschnitte mit Γ-förmigem Querschnitt abstützen.

## Claims

1. Bearing support (21) for an aircraft engine, manufactured in one piece by powder-bed additive manufacturing from a manufacturing platform (T), comprising a cylindrical element (23) including an annular stiffener (47) with a cross-section that changes along its circumference, this stiffener (47) being formed with alternating portions having a cross-section, as a radial cross-section of the cylindrical element, of a shape corresponding to that of the letter Γ (48) needing to be supported during the additive manufacturing, and of portions having a cross-section, as a radial cross-section of the cylindrical element, of a shape corresponding to that of the letter γ (51) not supported during the additive manufacturing.

2. Bearing support (21) according to claim 1, wherein each portion having a γ-shaped cross-section (51) includes a first ramp (52) that extends beyond the cylindrical element (23) and a second ramp (53) that extends beyond the first ramp (52) to join the cylindrical element (23).

3. Bearing support (21) according to claim 1 or 2, wherein the cylindrical element (23) includes a recess (54) at each portion having a γ-shaped cross-section (51).

4. Bearing support (21) according to one of claims 1 to 3, wherein at least one portion having a Γ-shaped cross-section (48) forms a fastening portion (49) coming from the machining of an excess thickness (58) formed by additive manufacturing.

5. Aircraft engine comprising a bearing support (21) according to one of the preceding claims.

6. Method for obtaining via additive manufacturing a bearing support according to one of claims 1 to 4, including a step of forming by additive manufacturing in a single piece of a blank part on the manufacturing platform (T), and of which the manufacture of the stiffener (47) involves the forming of supports (S) that support only the portions having a Γ-shaped cross-section.
